# EUROPÄISCHE PATENTSCHRIFT

(11) **EP 1 900 952 B1**
(45) Veröffentlichungstag und Bekanntmachung des Hinweises auf die Patenterteilung: **09.11.2011**
(21) Anmeldenummer: 07017253.1
(22) Anmeldetag: 04.09.2007
(51) Int. Cl.: F16D 13/38

(54) **Mehrscheibenkupplung für den Antriebsstrang eines Fahrzeugs**
Multi-disc clutch for the power transmission of a vehicle
Embrayage à plusieurs disques pour un conducteur de commande d'un véhicule

(30) Priorität: 14.09.2006 DE 102006043282; 09.08.2007 DE 102007037560
(43) Veröffentlichungstag der Anmeldung: 19.03.2008
(73) Patentinhaber: ZF Friedrichshafen AG, 88038 Friedrichshafen (DE)
(72) Erfinder: Orlamünder, Andreas, 97453 Schonungen (DE)

(56) Entgegenhaltungen:
- EP-A- 1 712 807
- DE-A1- 10 218 365
- DE-A1-102005 049 669
- GB-A- 1 251 468

## Beschreibung

Die vorliegende Erfindung betrifft eine Mehrscheibenkupplung für den Antriebsstrang eines Fahrzeugs, umfassend zwei mit einem gemeinsamen Nabenbereich gekoppelte Kupplungsscheiben, wobei jede der Kupplungsscheiben über eine jeweilige Belagsfederung an einem Reibbelagträger getragene Reibbeläge umfasst, einen Widerlagerbereich mit einer ersten Reibfläche für eine erste der Kupplungsscheiben, eine Zwischenplatte mit einer zweiten Reibfläche für die erste der Kupplungsscheiben und einer dritten Reibfläche für eine zweite der Kupplungsscheiben, sowie eine Anpressplatte mit einer vierten Reibfläche für die zweite der Kupplungsscheiben.

Derartige Mehrscheibenkupplungen werden vor allem in Fahrzeugen bzw. Antriebssträngen eingesetzt, in welchen große Drehmomente zwischen einem Antriebsaggregat und den Antriebsrädern zu übertragen sind, da durch den Einsatz mehrerer Reibflächenpaarungen entsprechend auch das übertragbare Drehmoment erhöht werden kann. Weiterhin ist es bekannt, bei Auslegung für derart große Antriebsdrehmomente Reibmaterialien für die Kupplungsscheiben vorzusehen, die den mechanischen und thermischen Belastungen stand halten. Hier haben sich anorganische Reibmaterialien, wie zum Beispiel Keramikmaterial, Kohlefasermaterial oder Sinterwerkstoffe, wie zum Beispiel Sinterbronze, als brauchbare Reibmaterialien erwiesen. Ein Nachteil davon ist jedoch der geringe Komfort bei der Durchführung von Einkuppelvorgängen und Auskuppelvorgängen, da es zum so genannten Kupplungsrupfen und zu Geräuschen kommen kann.

Das Dokument DE 102 18 365 offenbart eine Mehrscheibenkupplung gemäß dem Oberbegriff des Anspruchs 1.

Es ist das Ziel der vorliegenden Erfindung, eine Mehrscheibenkupplung für den Antriebsstrang eines Fahrzeugs vorzusehen, bei welcher bei Durchführung von Ein- bzw. Auskuppelvorgängen ein erhöhter Komfort erhalten werden kann.

Erfindungsgemäß wird diese Aufgabe gelöst durch eine Mehrscheibenkupplung für den Antriebsstrang eines Fahrzeugs, umfassend zwei mit einem gemeinsamen Nabenbereich gekoppelte Kupplungsscheiben, wobei jede der Kupplungsscheiben über eine jeweilige Belagsfederung an einem Reibbelagträger getragene Reibbeläge umfasst, einen Widerlagerbereich mit einer ersten Reibfläche für eine erste der Kupplungsscheiben, eine Zwischenplatte mit einer zweiten Reibfläche für die erste der Kupplungsscheiben und einer dritten Reibfläche für eine zweite der Kupplungsscheiben, eine Anpressplatte mit einer vierten Reibfläche für die zweite der Kupplungsscheiben, wobei die Zwischenplatte über eine diese in Richtung von dem Widerlagerbereich weg beaufschlagende erste Federanordnung bezüglich des Widerlagerbereichs abgestützt ist und die Anpressplatte über eine diese in Richtung von der Zwischenplatte weg beaufschlagende zweite Federanordnung abgestützt ist und wobei die Anpressplatte durch eine Kraftbeaufschlagungsanordnung zur Durchführung von Einkuppelvorgängen in Richtung auf die Kupplungsscheiben zu pressbar ist, wobei ferner die erste der Kupplungsscheiben in Verbindung mit der ersten Reibfläche und der zweiten Reibfläche einen ersten Drehmomentübertragungsbereich bereitstellt und die zweite der Kupplungsscheiben in Verbindung mit der dritten Reibfläche und der vierten Reibfläche einen zweiten Drehmomentübertragungsbereich bereitstellt und wobei bei Durchführung von Einkuppelvorgängen und Auskuppelvorgängen die beiden Drehmomentübertragungsbereiche zueinander unterschiedliche Drehmomentübertragungsverhalten aufweisen.

Bei der erfindungsgemäß ausgebildeten Mehrscheibenkupplung sind also die beiden Drehmomentübertragungsbereiche unterschiedlich ausgelegt, so dass sie auch für unterschiedliche Betriebsphasen bzw. in Verbindung mit unterschiedlichen Positionierungen innerhalb der Mehrscheibenkupplung optimal nutzbar werden.

Beispielsweise kann vorgesehen sein, dass eine der Kupplungsscheiben mit anorganischen Reibbelägen aufgebaut ist und die andere der Kupplungsscheiben mit organischen Reibbelägen aufgebaut ist. Durch das Ausgestalten einer der Kupplungsscheiben mit anorganischen Reibbelägen und der anderen Kupplungsscheibe mit organischen Reibbelägen wird es also möglich, beispielsweise in einer komfortkritischen Situation während eines Einkuppelvorgangs primär die Kupplungsscheibe mit den organischen Reibbelägen zu nutzen. Beispielsweise kann dabei vorgesehen sein, dass die erste der Kupplungsscheiben mit anorganischen Reibbelägen und die zweite der Kupplungsscheiben mit organischen Reibbelägen aufgebaut ist.

Weiter ist es möglich, dass eine der Kupplungsscheiben einen geringeren mittleren Reibradius aufweist, als die andere der Kupplungsscheiben. Auch durch die Auswahl des mittleren Reibradius wird es möglich, verschiedenes Kupplungsverhalten zu erlangen, was insbesondere auch in Verbindung mit der Auswahl verschiedener Reibbelagsmaterialien von besonderem Vorteil sein kann. Beispielsweise ist es möglich, dass die erste der Kupplungsscheiben einen geringeren mittleren Reibradius aufweist als die zweite der Kupplungsscheiben.

Um ein gestuftes Wirkverhalten der beiden Drehmomentübertragungsbereiche erlangen zu können, wird vorgeschlagen, dass die erste Federanordnung und die zweite Federanordnung derart aufeinander abgestimmt sind, dass bei Durchführung von Einkuppelvorgängen zunächst nur einer der Drehmomentübertragungsbereiche zur Drehmomentübertragung aktiv ist und ab Erreichen einer Schwelleneinkuppelstellung beide Drehmomentübertragungsbereiche zur Drehmomentübertragung aktiv sind. Beispielsweise kann vorgesehen sein, dass bei Durchführung von Einkuppelvorgängen zunächst der zweite Drehmomentübertragungsbereich aktiv ist und ab Erreichen der Schwelleneinkuppelstellung der zweite und der erste Drehmomentübertragungsbereich aktiv sind.

Bei einer besonders vorteilhaften Ausgestaltungvariante kann vorgesehen sein, dass die Schwelleneinkuppelstellung einem über die Mehrscheibenkupplung zu übertragenden Drehmoment entspricht, bei welchem ein auf Antriebsräder eines Fahrzeugs übertragenes Antriebsdrehmoment unter einer Rutschgrenze liegt, bis zu welcher das Antriebsdrehmoment ohne Durchdrehen der Antriebsräder auf eine Straße übertragen werden kann. Dies bedeutet, dass beispielsweise beim Anfahren der komplette Anfahrvorgang mit nur einem Drehmomentübertragungsbereich erfolgt, der dann komfortoptimiert ausgebildet sein kann, und erst dann zum Abfangen noch höherer zu übertragender Drehmomente bzw. zum Abfangen von Drehmomentspitzen den zweiten Drehmomentübertragungsbereich zu nutzen.

Vor allem bei Systemen, bei welchen eine Kupplungsbetätigung manuell über ein Kupplungspedal erfolgt, ist es vorteilhaft, wenn das über die Mehrscheibenkupplung übertragbare Drehmoment bei Durchführung eines Einkuppelvorgangs wenigstens bereichsweise progressiv ansteigt.

Werden automatisierte Systeme verwendet, so ist es hinsichtlich der einfacheren Durchführbarkeit von Regelvorgängen vorteilhaft, wenn das über die Mehrscheibenkupplung übertragbare Drehmoment bei Durchführung eines Einkuppelvorgangs wenigstens bereichsweise linear ansteigt. Besonders vorteilhafterweise kann dabei vorgesehen sein, dass das über die Mehrscheibenkupplung übertragbare Drehmoment während eines gesamten Einkuppelvorgangs im Wesentlichen linear ansteigt. Es ist selbstverständlich, dass hier nicht über den gesamten Kupplungsweg mit dem gleichen Anstieg des Drehmoments gearbeitet werden muss. Beispielsweise kann vorgesehen sein, dass bei Annäherung an eine vollkommen eingekuppelte Stellung die Steigung des linearen Anstiegs zunimmt.

Um die erfindungsgemäß aufgebaute Mehrscheibenkupplung in platzsparender Art und Weise in einen Antriebsstrang integrieren zu können, wird weiter vorgeschlagen, dass die erste Reibfläche, die zweite Reibfläche, die dritte Reibfläche und die vierte Reibfläche an einem Eingangsbereich der Mehrscheibenkupplung vorgesehen sind, welcher über eine Torsionsschwingungsdämpferanordnung mit einem Antriebsorgan zu koppeln ist, und dass der erste Drehmomentübertragungsbereich wenigstens bereichsweise sich axial überlappend mit der Torsionsschwingungsdämpferanordnung angeordnet ist. Dies ist vor allem dann vorteilhaft bzw. leicht realisierbar, wenn die erste der Kupplungsscheiben einen kleineren mittleren Reibradius aufweist und somit die ihr zugeordneten Reibflächen auch etwas weiter radial innen positioniert sein können.

Die vorliegende Erfindung wird nachfolgend mit Bezug auf die beiliegenden Zeichnungen detailliert beschrieben. Es zeigt:
- Fig. 1: einen Teillängsschnitt einer erfindungsgemäß aufgebauten Mehrscheibenkupplung;
- Fig. 2: ein Diagramm, das das über eine derartige Mehrscheibenkupplung der Fig. 1 übertragbare Drehmoment aufgetragen über dem Anpressplattenweg darstellt;
- Fig. 3: ein Diagramm, das die auf eine Zwischenplatte der Fig. 1 einwirkenden Kräfte in Abhängigkeit der Relativbewegung zweier Reibflächen eines Drehmomentübertragungsbereichs darstellt;
- Fig. 4: ein der Fig. 2 entsprechendes Diagramm für eine andere Kupplungsauslegung darstellt;
- Fig.5: ein der Fig. 3 entsprechendes Diagramm, welches der Kupplungsauslegung der Fig. 4 zugeordnet ist;
- Fig. 6: ein weiteres der Fig. 2 entsprechendes Diagramm mit rein linearem Anstieg des über die Kupplung übertragbaren Drehmoments.

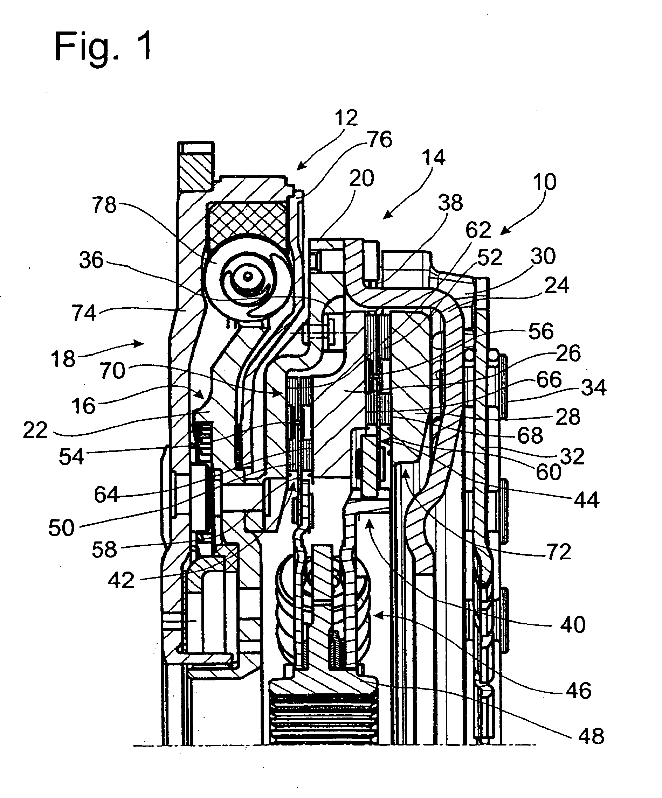

In Fig. 1 ist eine erfindungsgemäß aufgebaute Mehrscheibenkupplung 10 in Verbindung mit einem nach Art eines Zweimassenschwungrads aufgebauten Torsionsschwingungsdämpfer 12 dargestellt. Die Mehrscheibenkupplung 10, hier ausgebildet als Zweischeibenkupplung, umfasst einen Eingangsbereich 14, der mit einer Sekundärseite 16 des Torsionsschwingungsdämpfers 12 fest gekoppelt ist. Eine Primärseite 18 des Torsionsschwingungsdämpfers 12 ist in an sich bekannter Weise an eine Antriebswelle, beispielsweise eine Kurbelwelle einer Brennkraftmaschine, anzubinden.

Der Eingangsbereich 14 der Mehrscheibenkupplung 10 umfasst eine auch als Schwungmasse wirksame Widerlagerplatte 20, die in ihrem radial inneren Bereich mit einem Zentralscheibenelement 22 der Sekundärseite 16 fest verbunden ist und radial außen mit einem Gehäuse 24 der Mehrscheibenkupplung 10 fest verbunden ist. Zwischen der Widerlagerplatte 20 und dem Gehäuse 24 ist eine Zwischenplatte 26 vorgesehen, und zwischen der Zwischenplatte 26 und dem Gehäuse 24 ist eine Anpressplatte 28 vorgesehen. Die Anpressplatte 28 durchgreift radial außen mit Abstützabschnitten 30 das Gehäuse 24 und ist dort durch eine beispielsweise als Membranfeder ausgebildete Kraftbeaufschlagungsanordnung 32 beaufschlagt, die sich radial weiter innen über Distanzbolzen 34 oder dgl. bezüglich des Gehäuses 24 abstützt. Die Kraftbeaufschlagungsanordnung 32, also beispielsweise Membranfeder, erzeugt eine Einrückkraft und presst somit die Anpressplatte 28 in Richtung auf die Zwischenplatte 26 zu.

Die Zwischenplatte 26 ist über eine Mehrzahl von in Umfangsrichtung verteilt angeordneten Tangentialblattfedern 36 bezüglich der Widerlagerplatte 20 abgestützt, wobei die Tangentialblattfedern 36 eine Kraft erzeugen, welche die Zwischenplatte 26 in Richtung von der Widerlagerplatte 20 weg beaufschlagt.

Eine zweite Gruppe von Tangentialblattfedern 38 wirkt zwischen der Zwischenplatte 26 und der Anpressplatte 28, ist also an diesen beiden Platten festgelegt und erzeugt eine Kraft, welche die Zwischenplatte 26 und die Anpressplatte 28 in Richtung voneinander weg beaufschlagt. Die beiden Gruppen von Tangentialblattfedern oder allgemein Federelementen 36, 38 erzeugen also für die Mehrscheibenkupplung 10 eine Lüftkraft, so dass bei mangelnder oder aufgehobener Beaufschlagung durch die Kraftbeaufschlagungsanordnung 32 durch die Wirkung der Tangentialblattfedern 36 die Kupplung in einen Ausrückzustand gebracht wird.

Eine allgemein mit 40 bezeichnete Kupplungsscheibenbaugruppe umfasst in ihrem radial äußeren Bereich zwei Kupplungsscheiben 42, 44. Diese beiden Kupplungsscheiben 42, 44, die durch entsprechende Ausgestaltung auch axial bezüglich einander verlagerbar sind, sind radial innen über eine Torsionsschwingungsdämpferanordnung 46 an eine gemeinsame Nabe 48 angekoppelt und somit mit einer Abtriebswelle, beispielsweise einer Getriebeeingangswelle, zur Drehung koppelbar.

Jede der Kupplungsscheiben 42, 44 umfasst ringartig oder segmentartig ausgebildete Reibbeläge 50, 52, die über jeweilige Belagsfederungen 54, 56 an Belagträgern 58, 60 getragen sind. Durch diese Belagsfederungen 54 und 56 sind die Reibbeläge 50 und 52 axial elastisch an den jeweiligen Belagträgern 58, 60 getragen.

In Zuordnung zur ersten Kupplungsscheibe 42 weist die Widerlagerplatte 20 eine erste Reibfläche 62 auf, und die Zwischenplatte 26 weist eine zweite Reibfläche 64 auf. In Zuordnung zur zweiten Kupplungsscheibe 44 weist die Zwischenplatte 26 eine dritte Reibfläche 66 auf und weist in entsprechender Weise die Anpressplatte 28 eine vierte Reibfläche 68 auf. Es bilden also die erste Reibfläche 62 und die zweite Reibfläche 64 in Verbindung mit der ersten Kupplungsscheibe 42 einen ersten Drehmomentübertragungsbereich 70 und die dritte Reibfläche 66 in Verbindung mit der vierten Reibfläche 68 und der zweiten Kupplungsscheibe 44 einen zweiten Drehmomentübertragungsbereich 72 der Mehrscheibenkupplung 10.

Zum Aufbau des Torsionsschwingungsdämpfers 12 sei noch ausgeführt, dass die Primärseite 18 desselben zwei Deckscheibenelemente 74, 76 umfasst, welche radial außen einen Raum zur Aufnahme von Dämpferelementen 78, beispielsweise Schraubendruckfedern, bilden und diese in Umfangsrichtung abstützen. Das Zentralscheibenelement 22 greift in diesen Raum nach radial außen ein und bildet ebenfalls Abstützbereiche für die Dämpferelemente 78, so dass unter Kompression dieser Dämpferelemente 78 die Primärseite 18 und die Sekundärseite 16 in Umfangsrichtung bezüglich einander drehbar sind.

Man erkennt in Fig. 1, dass grundsätzlich die beiden Kupplungsscheiben 42, 44 unterschiedlich dimensioniert sind. So weist die Kupplungsscheibe 42 einen geringeren mittleren Reibradius auf, als die Kupplungsscheibe 44 und ist mithin so dimensioniert, dass sie deutlich radial innerhalb der Dämpferelemente 78 endet. Es ist somit die Möglichkeit geschaffen, den ersten Drehmomentübertragungsbereich 70 der Mehrscheibenkupplung 10 so zu gestalten, dass dieser radial innerhalb der Dämpferelemente 78 axial in den Torsionsschwingungsdämpfer 12 eintaucht, sich mit diesem also bereichsweise überlappt. Es ist somit zunächst für einen axial sehr kompakten Aufbau gesorgt.

Bei der in Fig. 1 dargestellten Mehrscheibenkupplung 10 sind die beiden Kupplungsscheiben 42, 44 bzw. deren Reibbeläge 50, 52 nicht nur unterschiedlich dimensioniert, sondern vorzugsweise auch aus unterschiedlichen Materialien aufgebaut. Während die mit größerem mittleren Reibradius ausgestaltete zweite Kupplungsscheibe 44 beispielsweise mit organischen Materialien aufgebaut ist, zum Beispiel Garne aus Glas- oder Polymerfaser sowie Kupfer- und Messingdraht, eingebettet in eine Mischung aus Harz, Kautschuk und Füllstoffen, ist die mit kleinerem mittlerem Reibradius ausgestaltete erste Kupplungsscheibe 42 mit Reibbelägen 50 aus anorganischem Material, wie zum Beispiel Keramik, Kohlefaser oder Sinterwerkstoffen aufgebaut. Derartige anorganische Reibbelagsmaterialien weisen den Vorteil auf, dass sie bei geringerer thermischer Empfindlichkeit einen höheren Reibwert bereitstellen, so dass erstens das Anordnen in einem nach außen hin vergleichsweise stark abgeschirmten Raumbereich nicht zu einer Überhitzungsbeschädigung der Reibbeläge 50 führen kann, und dass zweitens der geringere mittlere Reibradius, der an sich ein geringeres übertragbares Drehmoment mit sich bringt, kompensiert werden kann durch den höheren Reibwert. Die mit organischem Material aufgebauten Reibbeläge 52 der zweiten Kupplungsscheibe 44 weisen den Vorteil auf, dass, obgleich diese thermisch empfindlicher sind, gleichwohl jedoch auch besser gekühlt werden können, sie einen deutlich höheren Komfort beim Einkuppeln bereitstellen, also weniger zum Rupfen bzw. zur Geräuscherzeugung neigen.

Diese unterschiedliche Ausgestaltung bzw. unterschiedliche Charakteristik der beiden Kupplungsscheiben 42, 44 wird erfindungsgemäß dazu genutzt, das Einkuppelverhalten, und in entsprechender Weise selbstverständlich auch das Auskuppelverhalten, so auszulegen, dass bei einem Anfahrvorgang bzw. beim Einkuppeln zunächst der zweite Drehmomentübertragungsbereich 72 mit den organisch aufgebauten Reibbelägen 52 wirksam ist und erst dann, wenn bereits ein Drehmoment über die Mehrscheibenkupplung 10 übertragen wird, die Wirksamkeit des ersten Drehmomentübertragungsbereichs 70 einsetzt. Dies kann primär dadurch erreicht werden, dass die Kraftcharakteristik der Tangentialblattfedern 36 und 38 so aufeinander abgestimmt wird, dass bei Erzeugung einer Einrückkraft, also Beaufschlagung der Anpressplatte 28, zunächst im Wesentlichen nur die Tangentialblattfedern 38 komprimiert werden, also eine Verlagerung der Anpressplatte 28 in Richtung auf die Zwischenplatte 26 zu erfolgt, während die Tangentialblattfedern 36 bedingt auch durch ihre vorgespannte Einbaulage eine Verschiebung der Zwischenplatte 26 in Richtung auf die Widerlagerplatte 20 zu zunächst noch unterbinden. Erst dann, wenn die Einrückkraft einen bestimmten Grenzwert überschreitet, bewegt sich auch die Zwischenplatte 26 in Richtung auf die Widerlagerplatte 20 zu, so dass der erste Drehmomentübertragungsbereich aktiv wird.

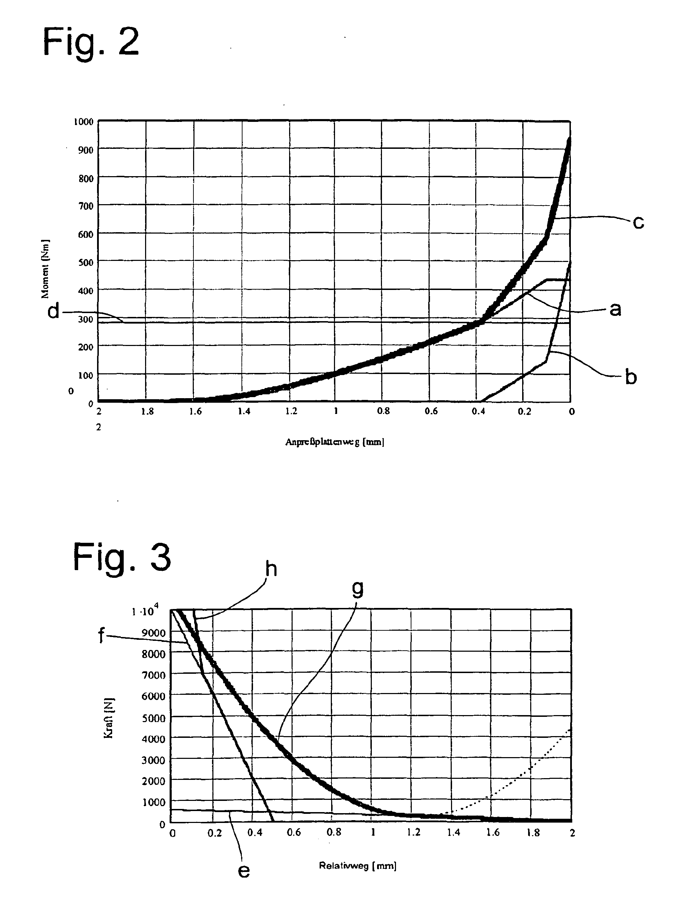

Dies ist beispielsweise in Fig. 2 dargestellt. Man erkennt hier aufgetragen über dem Weg der Anpressplatte 28 das über die Mehrscheibenkupplung 10 übertragene Drehmoment, aufgetragen in Nm. In Fig. 2 repräsentiert eine schwarz durchgezogen eingezeichnete Linie a den bei Durchführung eines Einrückvorgangs über den zweiten Drehmomentübertragungsbereich 72, also die zweite Kupplungsscheibe 44, übertragenen Drehmomentenanteil. Dieser steigt bei Bewegung der Anpressplatte in Richtung Einrücken progressiv an, was primär bedingt ist durch die Abstimmung der Federkraft der Tangentialblattfedern 38 auf die Federkraft der Belagsfederung 56. Die Kurve b stellt einen entsprechenden Drehmomentenverlauf für den ersten Drehmomentübertragungsbereich 70 dar. Man erkennt, dass dieser erst dann, wenn der Anpressplattenweg beispielsweise bezogen auf eine vollkommen eingerückte Positionierung "0" den Wert von 0,4 unterschreitet, beginnt, ein Drehmoment zu übertragen. Der Anstieg kann hier zunächst linear sein, und dort, wo durch dann vollständige Kompression der Belagsfederung 54 der Kupplungsscheibe 42 keine weitere Elastizität innerhalb der Kupplungsscheibe 42 selbst vorhanden ist, ist ein Knick und darauf folgend ein steilerer Anstieg des über diesen Drehmomentübertragungsbereich 70 übertragbaren Drehmoments erkennbar. Es ergibt sich also ein mit der dicken Linie c gekennzeichneter Verlauf für das gesamt über die Mehrscheibenkupplung 10 übertragbare Drehmoment. Man erkennt, dass dort, wo auch der erste Drehmomentübertragungsbereich 70 beginnt, ein Drehmoment zu übertragen, ein Knick oder steilerer dann beispielsweise mehr linearer Anstieg der Drehmomentkennlinie vorhanden ist. Dieser Knick, also das zusätzliche Einsetzen des ersten Drehmomentübertragungsbereichs 70, liegt näherungsweise bei einem Drehmomentenwert, der einer durch die Linie d wiedergegebenen Reifenrutschgrenze eines mit einer derartigen Mehrscheibenkupplung 10 ausgestatteten Fahrzeugs entspricht. Bis zu dieser Reifenrutschgrenze, also dem entsprechenden über den Antriebsstrang übertragenen Drehmoment, kann dieses ohne Durchdrehen der Reifen auf eine Straße übertragen werden, während bei größerem Drehmoment die Gefahr des Durchdrehens dieser Reifen entsteht.

Die Fig. 3 stellt in Zuordnung zu der Fig. 2 dar, wie die auf die Zwischenplatte 26 einwirkenden Kräfte sich in Abhängigkeit von der Relativbewegung bzw. der Relativpositionierung der einem jeweiligen Drehmomentübertragungsbereich 70 oder 72 zugeordneten Reibflächen 62, 64 bzw. 66, 68 verändern. Man erkennt beispielsweise in Fig. 3 anhand der Linie e die Kraft der Tangentialblattfedern 38 in Abhängigkeit von der Relativpositionierung der beiden, dieser zugeordneten Reibflächen 66 und 68. Man erkennt weiterhin anhand der Linie f die Kraft der Tangentialblattfedern 36 in Abhängigkeit von der Relativpositionierung bzw. der Relativbewegung der beiden Reibflächen 62 und 64. Die mit dickerer Linie eingezeichnete Kurve g gibt an, mit welcher Kraft die Zwischenplatte 26 belastet wird, und zwar erzeugt durch die Belagsfederung 56 der Kupplungsscheibe 44 und die auch an der Anpressplatte 28 sich abstützenden Tangentialblattfedern 38. Hier ist ebenfalls ein progressiver Kraftanstieg bei Annäherung der Reibflächen 66, 68 erkennbar, welcher primär auch bedingt ist durch die Abstimmung der Federn 38 und 56 aufeinander. Die Kurve h repräsentiert die bei Aktivierung des ersten Drehmomentübertragungsbereichs 70 auf die Zwischenplatte 26 einwirkende Kraft, welche primär bedingt ist durch die Federkraft der Tangentialblattfedern 36 und die Federkraft der Belagsfederung 54. Durch derartige Abstimmung der Federkräfte aufeinander kann also das in Fig. 2 gezeigte Kupplungsverhalten erlangt werden. Man erkennt dabei, dass im Vergleich zu den Tangentialblattfedern 36 die Tangentialblattfedern 38 sehr weich sind, so dass dafür gesorgt ist, dass, kommend von einer vollkommen ausgekuppelten Positionierung, im Wesentlichen zunächst nur die Tangentialblattfedern 38 komprimiert werden und somit nur der Drehmomentübertragungsbereich 72 aktiv wird.

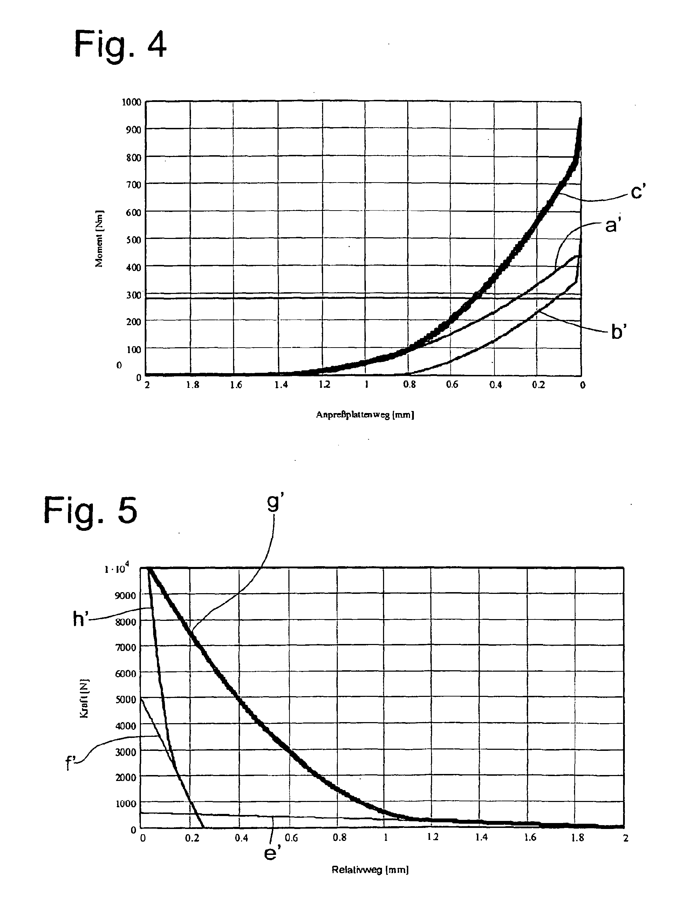

Die Fig. 4 und 5 zeigen eine andere Federauslegung. Man erkennt in Fig. 4, dass der durch die Drehmomentenkurve b' repräsentierte zweite Drehmomentübertragugnsbereich 72 bereits deutlich früher beginnt, ein Drehmoment mit zu übertragen, so dass noch deutlich vor Erreichen der Rutschgrenze über beide Drehmomentübertragungsbereiche 70 und 72 ein Drehmoment übertragen wird. Ferner erkennt man, dass primär durch die Auslegung der Tangentialblattfedern 38 die Drehmomentenkennlinie b' dort, wo der zweite Drehmomentübertragungsbereich 72 beginnt, ein Drehmoment zu übertragen, mit einer Steigung von 0 beginnt. Dies bedeutet, dass auch im Gesamtdrehmoment c' nicht der in Fig. 2 erkennbare Knick vorhanden ist, sondern ein allmählicher und somit mit größerem Komfort begleiteter, progressiver Drehmomentenanstieg vorhanden ist. Die Tatsache, dass auch in der Kurve b' erst deutlich später ein Abknicken erkennbar ist, ist durch die Abstimmung der Belagsfederung 56 auf die Tangentialblattfedern 38 bedingt.

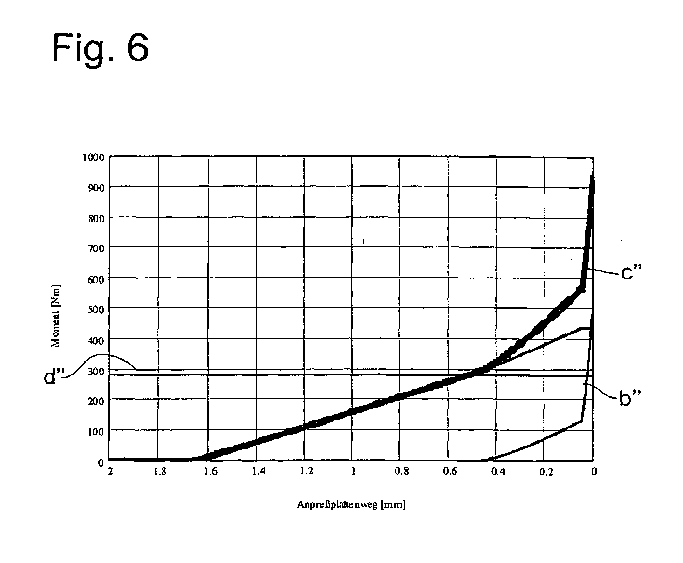

Die Fig. 6 zeigt eine weitere Alternative der Federabstimmung bzw. der Abstimmung der beiden Drehmomentübertragungsbereiche 70, 72 bei Durchführung von Einkuppelvorgängen bzw. Auskuppelvorgängen. Man erkennt hier, dass, ähnlich wie im Falle der Fig. 4, der erste Drehmomentübertragungsbereich 70, hier repräsentiert durch die Kurve b", erst dann aktiv wird, wenn das über die Mehrscheibenkupplung 10 übertragene Drehmoment im Bereich der Reifenrutschgrenze d" liegt. Um beim Einsetzen des ersten Drehmomentübertragungsbereichs 70 einen weniger stark ausgeprägten Knick zu erhalten, kann auch hier der Gradient der Kennlinie b" am Beginn der Drehmomentübertragung über diesen ersten Drehmomentübertragungsbereich 70 nahezu Null sein. Im Gegensatz zur Auslegung gemäß Fig. 2 ist jedoch bei der in Fig. 6 erkennbaren Auslegung im gesamten Stellbereich der Verlauf des gesamt über die Mehrscheibenkupplung übertragenen Drehmoments, repräsentiert durch die Kurve c", linear, wobei lineare Abschnitte mit verschiedenen Steigungen vorhanden sind. Im Gegensatz zu der vorangehend geschilderten progressiven Veränderung dieses über die Kupplung übertragenen oder übertragbaren Drehmoments hat der lineare Anstieg den Vorteil, dass bei Einsatz einer derartigen Mehrscheibenkupplung in einem automatisierten System Regelvorgänge deutlich einfacher durchgeführt werden können, als bei progressivem Momentenanstieg, der vor allem für die manuelle Betätigung vorzuziehen ist.

Es sei darauf hingewiesen, dass selbstverständlich die erfindungsgemäß aufgebaute Mehrscheibenkupplung 10 in verschiedenen Aspekten variiert werden kann. So können die vorangehend beschriebenen Tangentialblattfedern 36, 38 ersetzt werden durch andersartige Federn wie zum Beispiel Schraubendruckfedern oder dergleichen. Auch ist es selbstverständlich, dass an Stelle des Torsionsschwingungsdämpfers 12 die Mehrscheibenkupplung 10 beispielsweise über eine Starter-Generator-Anordnung, diese möglicherweise kombiniert mit einem Torsionsschwingungsdämpfer, an eine Antriebswelle angebunden sein kann. Auch ist es möglich, beispielsweise die Zuordnung von organischen oder anorganischen Reibbelagsmaterialien zu den beiden Kupplungsscheiben zu vertauschen oder/und dafür zu sorgen, dass erst der erste Drehmomentübertragungsbereich aktiv wird und dann der zweite Drehmomentübertragungsbereich, was im Wesentlichen erzielt werden kann durch eine Vertauschung der Federcharakteristik der hier jeweils vorgesehen Tangentialblattfedern oder sonstigen Federn. Auch sei darauf hingewiesen, dass beispielsweise die die Anpressplatte 28 beaufschlagenden Tangentialblattfedern 38 oder sonstige Federn nicht notwendigerweise an der Zwischenplatte 26 abgestützt sein müssen, sondern sich beispielsweise auch bezüglich des Eingangsbereichs 14 unmittelbar abstützten können, so dass die Beaufschlagung der Anpressplatte 28 durch die Kraftbeaufschlagungsanordnung 32 zunächst zu keinerlei Reaktion der Zwischenplatte 26 führen kann. Dies bedeutet, dass die Zwischenplatte 26 dann nur durch die Reibbeläge 52 der Kupplungsscheibe 44 beaufschlagt wird, und nicht durch die Tangentialblattfedern oder dergleichen, welche die Anpressplatte 28 in Richtung Ausrücken vorspannen. Auch sei darauf hingewiesen, dass die Mehrscheibenkupplung, so wie in Fig. 1 dargestellt, als trockenlaufende Kupplung ausgestaltet sein kann, selbstverständlich aber auch als nasslaufende Kupplung ausgebildet sein kann, bei welcher die miteinander in Reibwechselwirkung tretenden Oberflächen sich zumindest teilweise in einem fließfähigen Medium bewegen, um einen Schmier- bzw. Kühleffekt erlangen zu können.

Weiter sei abschließend darauf hingewiesen, dass, wie aus der vorangehenden Erklärung hervorgeht, unterschiedliches Drehmomentübertragungsverhalten in Zuordnung zu den verschiedenen Kupplungsscheiben nicht notwendigerweise bedeutet, dass die über diese beiden Kupplungsscheiben maximal übertragbaren Drehmomente sich beispielsweise im vollständig eingekuppelten Zustand unterscheiden müssen. Das unterschiedliche Drehmomentübertragugnsverhalten kann das unterschiedliche zeitliche Wirksamwerden bei Durchführung von Einkuppelvorgängen oder Auskuppelvorgängen betreffen, das durch die Auswahl der reibend wirksam werdenden Materialien beeinflussbare Kupplungsrupfen betreffen, kann das thermische Verhalten betreffen und kann selbstverständlich auch das übertragbare Drehmoment betreffen, das insbesondere durch die Auswahl der Materialien und durch die Auswahl des mittleren Reibradius bzw. der gesamt reibend wirksam werdenden Oberfläche in Zuordnung zu einer jeweiligen Kupplungsscheibe beeinflusst werden kann. So kann ein geringerer mittlerer Reibradius, beispielsweise Erlangen eines gleichen maximal übertragbaren Drehmoments, kompensiert werden durch entsprechend größere Reibkoeffizienten der jeweils auszuwählenden Materialien.

## Patentansprüche

1. Mehrscheibenkupplung für den Antriebsstrang eines Fahrzeugs, umfassend:
- zwei mit einem gemeinsamen Nabenbereich (48) gekoppelte Kupplungsscheiben (42, 44), wobei jede der Kupplungsscheiben (42, 44) über eine jeweilige Belagsfederung (54, 56) an einem Reibbelagträger (58, 60) getragene Reibbeläge (50, 52) umfasst,
- einen Widerlagerbereich (20) mit einer ersten Reibfläche (62) für eine erste der Kupplungsscheiben (42, 44),
- eine Zwischenplatte (26) mit einer zweiten Reibfläche (64) für die erste der Kupplungsscheiben (42, 44) und einer dritten Reibfläche (66) für eine zweite der Kupplungsscheiben (42, 44),
- eine Anpressplatte (28) mit einer vierten Reibfläche (68) für die zweite der Kupplungsscheiben (42, 44),
wobei die Zwischenplatte (26) über eine diese in Richtung von dem Widerlagerbereich (20) weg beaufschlagende erste Federanordnung (56) bezüglich des Widerlagerbereichs (20) abgestützt ist und die Anpressplatte (28) über eine diese in Richtung von der Zwischenplatte (26) weg beaufschlagende zweite Federanordnung (38) abgestützt ist und wobei die Anpressplatte (28) durch eine Kraftbeaufschlagungsanordnung (32) zur Durchführung von Einkuppelvorgängen in Richtung auf die Kupplungsscheiben (42, 44) zu pressbar ist, wobei ferner die erste der Kupplungsscheiben (42, 44) in Verbindung mit der ersten Reibfläche (62, 64) und der zweiten Reibfläche (66, 68) einen ersten Drehmomentübertragungsbereich (70) bereitstellt und die zweite der Kupplungsscheiben (42, 44) in Verbindung mit der dritten Reibfläche (66) und der vierten Reibfläche (68) einen zweiten, Drehmomentübertragungsbereich (72) bereitstellt, **dadurch gekennzeichnet, dass** bei Durchführung von Einkuppelvorgängen und Auskuppelvorgängen die beiden Drehmomentübertragungsbereiche (70, 72) zueinander unterschiedliche Drehmomentübertragungsverhalten aufweisen.

2. Mehrscheibenkupplung nach Anspruch 1 **dadurch gekennzeichnet, dass** eine der Kupplungsscheiben (42, 44) mit anorganischen Reibbelägen (50, 52) aufgebaut ist und die andere der Kupplungsscheiben mit organischen Reibbelägen (50, 52) aufgebaut ist.

3. Mehrscheibenkupplung nach Anspruch 2, **dadurch gekennzeichnet, dass** die erste der Kupplungsscheiben (42, 44) mit anorganischen Reibbelägen (50) und die zweite der Kupplungsscheiben (42, 44) mit organischen Reibbelägen (52) aufgebaut ist.

4. Mehrscheibenkupplung nach einem der Ansprüche 1 bis 3, **dadurch gekennzeichnet, dass** eine der Kupplungsscheiben (42, 44) einen geringeren mittleren Reibradius aufweist, als die andere der Kupplungsscheiben (42, 44).

5. Mehrscheibenkupplung nach Anspruch 4, **dadurch gekennzeichnet, dass** die erste der Kupplungsscheiben (42, 44) einen geringeren mittleren Reibradius aufweist als die zweite der Kupplungsscheiben (42, 44).

6. Mehrscheibenkupplung nach einem der Ansprüche 1 bis 5, **dadurch gekennzeichnet, dass** die erste Federanordnung (36) und die zweite Federanordnung (38) derart aufeinander abgestimmt sind, dass bei Durchführung von Einkuppelvorgängen zunächst nur einer der Drehmomentübertragungsbereiche (70, 72) zur Drehmomentübertragung aktiv ist und ab Erreichen einer Schwelleneinkuppelstellung beide Drehmomentübertragungsbereiche (70, 72) zur Drehmomentübertragung aktiv sind.

7. Mehrscheibenkupplung nach Anspruch 6, **dadurch gekennzeichnet, dass** bei Durchführung von Einkuppelvorgängen zunächst der zweite Drehmomentübertragungsbereich (72) aktiv ist und ab Erreichen der Schwelleneinkuppelstellung der zweite und der erste Drehmomentübertragungsbereich (70, 72) aktiv sind.

8. Mehrscheibenkupplung nach Anspruch 6 oder 7, **dadurch gekennzeichnet, dass** die Schwelleneinkuppelstellung einem über die Mehrscheibenkupplung (10) zu übertragenden Drehmoment entspricht, bei welchem ein auf Antriebsräder eines Fahrzeugs übertragenes Antriebsdrehmoment unter einer Rutschgrenze (d) liegt, bis zu welcher das Antriebsdrehmoment ohne Durchdrehen der Antriebsräder auf eine Straße übertragen werden kann.

9. Mehrscheibenkupplung nach einem der Ansprüche 6 bis 8, **dadurch gekennzeichnet, dass** das über die Mehrscheibenkupplung (10) übertragbare Drehmoment bei Durchführung eines Einkuppelvorgangs wenigstens bereichsweise progressiv ansteigt.

10. Mehrscheibenkupplung nach einem der Ansprüche 6 bis 9, **dadurch gekennzeichnet, dass** das über die Mehrscheibenkupplung (10) übertragbare Drehmoment bei Durchführung eines Einkuppelvorgangs wenigstens bereichsweise linear ansteigt.

11. Mehrscheibenkupplung nach Anspruch 10, **dadurch gekennzeichnet, dass** das über die Mehrscheibenkupplung (10) übertragbare Drehmoment während eines gesamten Einkuppelvorgangs im Wesentlichen linear ansteigt.

12. Mehrscheibenkupplung nach Anspruch 11, **dadurch gekennzeichnet, dass** bei Annäherung an eine vollkommen eingekuppelte Stellung die Steigung des linearen Anstiegs zunimmt.

13. Mehrscheibenkupplung nach einem der Ansprüche 1 bis 12, **dadurch gekennzeichnet, dass** die erste Reibfläche (62), die zweite Reibfläche (64), die dritte Reibfläche (66) und die vierte Reibfläche (68) an einem Eingangsbereich (14) der Mehrscheibenkupplung (10) vorgesehen sind, welcher über eine Torsionsschwingungsdämpferanordnung (12) mit einem Antriebsorgan zu koppeln ist, und dass der erste Drehmomentübertragungsbereich (70) wenigstens bereichsweise sich axial überlappend mit der Torsionsschwingungsdämpferanordnung (12) angeordnet ist.

## Claims

1. Multi-disc clutch for the drivetrain of a vehicle, comprising:
- two clutch discs (42, 44) which are coupled to a common hub region (48), wherein each of the clutch discs (42, 44) comprises friction linings (50, 52) which are borne on a friction lining carrier (58, 60) via a respective lining suspension (54, 56),
- a counter bearing region (20) having a first friction surface (62) for a first of the clutch discs (42, 44),
- an intermediate plate (26) having a second friction surface (64) for the first of the clutch discs (42, 44) and having a third friction surface (66) for a second of the clutch discs (42, 44),
- a pressure plate (28) having a fourth friction surface (68) for the second of the clutch discs (42, 44),
wherein the intermediate plate (26) is supported with respect to the counter bearing region (20) via a first spring arrangement (56) which loads said intermediate plate in the direction away from the counter bearing region (20), and the pressure plate (28) is supported by means of a second spring arrangement (38) which loads said pressure plate in the direction away from the intermediate plate (26), and wherein the pressure plate (28) can be pressed in the direction of the clutch discs (42, 44) by means of a force-exerting arrangement (32) in order to carry out clutch engagement processes, wherein furthermore the first of the clutch discs (42, 44) in conjunction with the first friction surface (62, 64) and the second friction surface (66, 68) provides a first torque-transmitting region (70) and the second of the clutch discs (42, 44) in conjunction with the third friction surface (66) and the fourth friction surface (68) provides a second torque-transmitting region (72), **characterized in that**, during the execution of clutch engagement processes and clutch disengagement processes, the two torque-transmitting regions (70, 72) have different torque-transmitting characteristics from one another.

2. Multi-disc clutch according to Claim 1, **characterized in that** one of the clutch discs (42, 44) is constructed with inorganic friction linings (50, 52) and the other of the clutch discs is constructed with organic friction linings (50, 52).

3. Multi-disc clutch according to Claim 2, **characterized in that** the first of the clutch discs (42, 44) is constructed with inorganic friction linings (50) and the second of the clutch discs (42, 44) is constructed with organic friction linings (52).

4. Multi-disc clutch according to one of Claims 1 to 3, **characterized in that** one of the clutch discs (42, 44) has a smaller mean friction radius than the other of the clutch discs (42, 44).

5. Multi-disc clutch according to Claim 4, **characterized in that** the first of the clutch discs (42, 44) has a smaller mean friction radius than the second of the clutch discs (42, 44).

6. Multi-disc clutch according to one of Claims 1 to 5, **characterized in that** the first spring arrangement (36) and the second spring arrangement (38) are coordinated with one another such that, during the execution of clutch engagement processes, firstly only one of the torque-transmitting regions (70, 72) is active for the transmission of torque, and when a threshold clutch engagement position is reached, both torque-transmitting regions (70, 72) are active for the transmission of torque.

7. Multi-disc clutch according to Claim 6, **characterized in that**, during the execution of clutch engagement processes, firstly the second torque-transmitting region (72) is active, and when the threshold clutch engagement position is reached, the second and the first torque-transmitting regions (70, 72) are active.

8. Multi-disc clutch according to Claim 6 or 7, **characterized in that** the threshold clutch engagement position corresponds to a torque to be transmitted via the multi-disc clutch (10) at which a drive torque transmitted to drive wheels of a vehicle lies below a slip limit (d) up to which the drive torque can be transmitted to a road without the drive wheels spinning.

9. Multi-disc clutch according to one of Claims 6 to 8, **characterized in that** the torque that can be transmitted via the multi-disc clutch (10) increases progressively at least in regions during the execution of a clutch engagement process.

10. Multi-disc clutch according to one of Claims 6 to 9, **characterized in that** the torque that can be transmitted via the multi-disc clutch (10) increases linearly at least in regions during the execution of a clutch engagement process.

11. Multi-disc clutch according to Claim 10, **characterized in that** the torque that can be transmitted via the multi-disc clutch (10) increases substantially linearly during the entire clutch engagement process.

12. Multi-disc clutch according to Claim 11, **characterized in that** the gradient of the linear increase increases when a fully engaged position of the clutch is approached.

13. Multi-disc clutch according to one of Claims 1 to 12, **characterized in that** the first friction surface (62), the second friction surface (64), the third friction surface (66) and the fourth friction surface (68) are provided on an input region (14), for coupling to a drive member via a torsional vibration damper arrangement (12), of the multi-disc clutch (10), and **in that** the first torque-transmitting region (70) is arranged at least in regions so as to axially overlap the torsional vibration damper arrangement (12).

## Revendications

1. Embrayage multidisques pour la chaîne cinématique d'un véhicule, comprenant :
- deux disques d'embrayage (42, 44) accouplés à une région de moyeu commune (48), chacun des disques d'embrayage (42, 44) comprenant des garnitures de friction (50, 52) portées par le biais d'une suspension de garniture respective (54, 56) sur un support de garniture de friction (58, 60),
- une zone de butée (20) avec une première surface de friction (62) pour un premier des disques d'embrayage (42, 44),
- une plaque intermédiaire (26) avec une deuxième surface de friction (64) pour le premier des disques d'embrayage (42, 44) et une troisième surface de friction (66) pour un deuxième des disques d'embrayage (42, 44),
- une plaque de pression (28) avec une quatrième surface de friction (68) pour le deuxième des disques d'embrayage (42, 44),
la plaque intermédiaire (26) étant supportée par rapport à la région de butée (20) par le biais d'un premier agencement de ressort (56) la sollicitant dans la direction opposée à la région de butée (20), et la plaque de pression (28) étant supportée par le biais d'un deuxième agencement de ressort (38) la sollicitant dans la direction opposée à la plaque intermédiaire (26), et la plaque de pression (28) pouvant être pressée par un agencement de sollicitation de force (32) pour effectuer des opérations d'embrayage dans la direction des disques d'embrayage (42, 44), le premier des disques d'embrayage (42, 44) fournissant en outre, conjointement avec la première surface de friction (62, 64) et la deuxième surface de friction (66, 68), une première zone de transfert de couple (70) et le deuxième des disques d'embrayage (42, 44) fournissant, conjointement avec la troisième surface de friction (66) et la quatrième surface de friction (68), une deuxième région de transfert de couple (72),
**caractérisé en ce que** lors de la mise en oeuvre d'opérations d'embrayage et de débrayage, les deux régions de transfert de couple (70, 72) présentent un comportement de transfert de couple différent l'une de l'autre.

2. Embrayage multidisques selon la revendication 1, **caractérisé en ce que** l'un des disques d'embrayage (42, 44) est construit avec des garnitures de friction inorganiques (50, 52) et l'autre des disques d'embrayage est construit avec des garnitures de friction organiques (50, 52).

3. Embrayage multidisques selon la revendication 2, **caractérisé en ce que** le premier des disques d'embrayage (42, 44) est construit avec des garnitures de friction inorganiques (50) et le deuxième des disques d'embrayage (42, 44) est construit avec des garnitures de friction organiques (52).

4. Embrayage multidisques selon l'une quelconque des revendications 1 à 3, **caractérisé en ce que** l'un des disques d'embrayage (42, 44) présente un rayon de friction moyen plus petit que l'autre des disques d'embrayage (42, 44).

5. Embrayage multidisques selon la revendication 4, **caractérisé en ce que** le premier des disques d'embrayage (42, 44) présente un plus petit rayon de friction moyen que le deuxième des disques d'embrayage (42, 44).

6. Embrayage multidisques selon l'une quelconque des revendications 1 à 5, **caractérisé en ce que** le premier agencement de ressort (36) et le deuxième agencement de ressort (38) sont adaptés l'un à l'autre de telle sorte que lors de la mise en oeuvre d'opérations d'embrayage, d'abord seulement l'une des régions de transfert de couple (70, 72) soit active pour le transfert de couple, et qu'à partir d'une position d'embrayage seuil, les deux régions de transfert de couple (70, 72) soient actives pour le transfert de couple.

7. Embrayage multidisques selon la revendication 6, **caractérisé en ce que** lors de la mise en oeuvre d'opérations d'embrayage, d'abord la deuxième région de transfert de couple (72) est active et à partir de la position d'embrayage seuil, la première et la deuxième région de transfert de couple (70, 72) sont actives.

8. Embrayage multidisques selon la revendication 6 ou 7, **caractérisé en ce que** la position d'embrayage seuil correspond à un couple à transférer par le biais de l'embrayage multidisques (10), auquel un couple d'entraînement transmis aux roues motrices d'un véhicule est en dessous d'une limite de glissement (d), jusqu'à laquelle le couple d'entraînement peut être transmis sans patinage des roues motrices sur une route.

9. Embrayage multidisques selon l'une quelconque des revendications 6 à 8, **caractérisé en ce que** le couple pouvant être transmis par le biais de l'embrayage multidisques (10) augmente progressivement au moins en partie lors de la mise en oeuvre d'une opération d'embrayage.

10. Embrayage multidisques selon l'une quelconque des revendications 6 à 9, **caractérisé en ce que** le couple pouvant être transmis par le biais de l'embrayage multidisques (10) augmente au moins en partie linéairement lors de la mise en oeuvre d'une opération d'embrayage.

11. Embrayage multidisques selon la revendication 10, **caractérisé en ce que** le couple pouvant être transmis par le biais de l'embrayage multidisques (10) augmente essentiellement linéairement pendant une opération d'embrayage complète.

12. Embrayage multidisques selon la revendication 11, **caractérisé en ce que** lors du rapprochement d'une position complètement embrayée, la pente de l'augmentation linéaire augmente.

13. Embrayage multidisques selon l'une quelconque des revendications 1 à 12, **caractérisé en ce que** la première surface de friction (62), la deuxième surface de friction (64), la troisième surface de friction (66) et la quatrième surface de friction (68) sont prévues sur une région d'entrée (14) de l'embrayage multidisques (10) qui doit être accouplée à un organe d'entraînement par le biais d'un agencement d'amortisseur des oscillations de torsion (12), et **en ce que** la première région de transfert de couple (70) est disposée au moins en partie en chevauchant axialement l'agencement d'amortisseur d'oscillations de torsion (12).
